# EUROPEAN PATENT APPLICATION

(11) **EP 4 234 213 A1**
(43) Date of publication of application: **30.08.2023**
(21) Application number: 22159207.4
(22) Date of filing: 28.02.2022
(51) Int. Cl.: B29C 65/16

(54) **LASER WELDING DEVICE FOR CLAMPING AND WELDING COMPONENTS AND METHOD FOR CLAMPING AND WELDING COMPONENTS**

(71) Applicant: Ostbayerische Technische Hochschule Regensburg, 93049 Regensburg (DE)
(72) Inventor: MAIWALD, Frederik, 93053 Regensburg (DE); HIERL, Stefan, 92348 Berg (DE)
(74) Representative: Hoefer & Partner Patentanwälte mbB

(57) **Abstract**

The invention concerns a laser welding device (1) for clamping and welding components (2), comprising a clamping device (20), which comprises at least one clamping tool (3, 16), and which is configured to clamp, in a first direction (7), at least two components (2) that are to be welded along a welding trajectory (5) or at a welding point (29). Therein, the at least one clamping tool (3, 16) is configured to, in a clamped state, pass a clamping force (10) of the clamping device (20) along the first direction (7) into the component (2) in contact with the clamping tool (3) directly above the welding trajectory (5) or directly above the welding point (29). The laser welding device (1) further comprises at least one laser device (8) configured to generate at least one laser beam (9) which passes by the at least one clamping tool (3, 16) along the first direction (7) and impinges on the welding trajectory (5) or on the welding point (29). The present invention further concerns a method for clamping and welding components (2).

## Description

The invention concerns a laser welding device for clamping and welding components. The invention also concerns a method for clamping and welding components.

From the state of the art, laser welding devices for clamping and welding components together, especially plastic sheets, plates or parts, are known. Therein, the for instance plastic plates are stacked, clamped together, and welded along a predefined welding trajectory. The clamping of the plates generally provides a good thermal contact between the plates. The welding trajectory is an area that is impinged upon by a laser, which heats the plastic plates along a path in an area or plane adjacent to a boundary between the stacked plates. Therein, a common problem to be solved is providing a clamping device or tool which can clamp the stacked plates without obstructing the laser beam for welding the plates.

One common solution is to employ clamping jaws, for instance clamping frames, which clamp the plates at surfaces thereof outside of and surrounding the welding trajectory. Thereby, the laser can impinge upon the welding trajectory without being hindered or obstructed by the clamping device. Another common solution is to employ a glass plate as a clamping jaw, especially in cases in which the components to be welded are not stiff, i.e. in the case that these are flexible and/or thin. Therein, the laser traverses first through the glass plate and then enters the stacked plates underneath so as to impinge upon the welding trajectory.

The first solution has the problem that a clamping force is not exerted directly onto the areas of the welding trajectory. Thereby, especially in the case that the components to be welded are flexible, a close connection of the components at the welding trajectory is not possible, thus reducing the quality of the weld. The second solution has the problem that the glass plate affects the trajectory and intensity of the laser beam such that the laser device generating the laser beam must be calibrated so as to take the glass plate into consideration. Further, the glass plate can have impurities such as dust onto the surface of the components to be welded, which can also negatively impact the trajectory and intensity of the welding laser. Lastly, the glass plate can crack or break, further increasing costs.

It is an object of the present invention to provide a laser welding device and a method for clamping and welding components which overcome these problems. In particular, it is an object of the present invention to provide a laser welding device and a method for clamping and welding components capable of generating a high-quality and secure weld between components.

The solution of this object is achieved by the features of the independent claims. The dependent claims contain advantageous embodiments of the present invention.

In particular, the solution of this object is achieved by the laser welding device of the present invention. The laser welding device comprises a clamping device, which comprises at least one clamping tool and which is configured to clamp, in a first direction, at least two components that are to be welded along a welding trajectory or at a welding point. Therein, the at least one clamping tool is configured to, in a clamped state, pass a clamping force of the clamping device along the first direction into the component in contact with the clamping tool directly above the welding trajectory or directly above the welding point. The laser welding device further comprises at least one laser device which is configured to generate at least one laser beam that passes by the at least one clamping tool along the first direction and impinges on the welding trajectory or on the welding point.

The laser welding device of the present invention thus provides a clamping device with which the clamping force is introduced into the components directly above the welding trajectory, wherein the at least one laser device generates a laser beam which passes by the clamping tool of the clamping device, such that a high-quality and secure weld between components is achieved.

In the foregoing and in the following, "components" denotes either separate elements, or different points or areas of one element which are to be welded together. For example, "two components" may refer to two plates which are to be welded, or it may refer to two end surfaces of, for example, a U-shaped element, which is to be welded so as to form an O-shape. In other words, the at least two components may be integral parts of one element, i.e. components of an element. On the other hand, the at least two components may be parts of two separate elements.

The first direction is defined as the direction along which the clamping device clamps the components. The first direction is preferably substantially perpendicular to a surface of the component in contact with the clamping tool. Preferably, the clamping tool clamps the surface of the component with an angle of 0° with respect to a surface normal vector of the component. In other words, the clamping tool preferably clamps the surface perpendicularly. Further preferably, the clamping tool clamps the surface of the component at an off-angle, i.e. at an angle between the surface normal and a thickness axis of the clamping tool. For instance, the clamping tool clamps the surface at an off-angle of between and including 0° and 45°.

Further preferably, the laser beam generated by the laser device propagates substantially parallel, along the first direction, to the clamping tool. In other words, if the clamping tool preferably clamps the surface at an off-angle, the laser beam preferably also propagates at an off-angle (propagation-angle), especially at the same off-angle, and vice-versa. The off-angle (propagation-angle) of the laser beam does not necessarily need to be equal to the off-angle of the clamping tool. In this case, the term "passes by the at least one clamping tool along the first direction" means that the laser beam comprises a direction component parallel to the first direction, as it propagates along the first direction, but may also comprise a direction component perpendicular to the first direction.

In the foregoing and in the following, a "welding trajectory" denotes a path or contour along which the components are to be welded. The welding trajectory is especially continuous. In other words, the welding trajectory does not include any gaps or breaks. On the other hand, the welding trajectory is especially non-continuous, instead including a plurality of portions with gaps or breaks therebetween. The welding trajectory preferably lies within a plane, i.e. is preferably one-dimensional (a line) or two-dimensional (a path within a plane), or preferably extends along different heights in the first direction, i.e. is preferably three-dimensional.

The welding trajectory may also comprise a large number of welding points, which, taken together, form a path or contour.

In the case of welding the components along a welding trajectory, the clamping tool may preferably be repeatedly disposed on different portions or points of the welding trajectory or on different welding points at which the laser device (currently) welds the components. In other words, the clamping tool may be disposed on and clamp a portion of the welding trajectory or a welding point, said portion welded by the laser device, and then the clamping tool may be disposed on another portion of the welding trajectory or a different welding point.

Advantageously, the clamping tool and the laser device can operate substantially independently. Therein, the laser device can for example continuously weld along the welding trajectory while the clamping tool is simultaneously transferred between portions or points of the welding trajectory or different welding points.

In an advantageous embodiment, the at least one clamping tool is substantially not transparent. Preferably, the at least one clamping bar is substantially not transparent to the spectrum of the laser beam. Advantageously, the at least one clamping bar is not formed of glass or any other substantially transparent material. In particular, the at least one clamping bar is preferably formed of metal.

In another advantageous embodiment, the clamping tool is formed of a material transparent for visible light. Therein, it is possible to monitor the welding process underneath the clamping tool. On the other hand, in this case, the laser beam is generated so as to substantially not pass through the clamping tool, but instead pass by the clamping tool. Although in this case portions of the laser beam may be considered as passing through the clamping tool, these portions of the laser beam are preferably not used for welding the components. Instead, only those portions passing by the clamping tool and impinging on the welding trajectory or point are used for welding the components.

In an advantageous embodiment, the clamping device comprises a holding frame which at least partially surrounds the clamping tool, wherein the holding frame is connected to the clamping tool via at least one holding fillet. Preferably, the holding frame surrounds all clamping tools. Preferably, the clamping device comprises a plurality of holding fillets, each connecting one clamping tool to the holding frame. Further preferably, the clamping device comprises a plurality of holding fillets, wherein at least two holding fillets connect one clamping tool to the holding frame. In the preferable case that the clamping device comprises only one clamping tool, the clamping device preferably further comprises a plurality of holding fillets all connecting the clamping tool to the holding frame.

In a further advantageous embodiment, the holding frame is configured so as to be at least partially surrounded by the clamping tool(s), wherein the holding frame is connected to the clamping tool(s) via the at least one holding fillet. In other words, the holding frame may, for example, be radially in the center of the device, wherein the clamping tool is provided at least partially surrounding the holding frame. Such a configuration is particularly useful in the case that the components to be welded comprise for example a hole in their middle. In this exemplary case, a shape of the holding frame can preferably correspond to the shape of the hole in the components. For example, the holding frame can be a block.

In another advantageous embodiment, in addition or alternatively to the holding fillets, the clamping device comprises at least one magnetic, especially electromagnetic, connecting portion, which connects the holding frame and the at least one clamping tool. In particular, the at least one connecting portion is preferably of a magnetic clamping technology.

Advantageously, the holding frame, the at least one holding fillet and at the least one clamping tool are formed integrally with one another.

In one advantageous embodiment, the clamping tool is preferably a clamping bar. In other words, the clamping tool is preferably substantially bar-shaped.

Preferably, the clamping bar is disposed, in the clamped state, such that its longitudinal direction is substantially parallel to the welding trajectory. Further preferably, the clamping bar is disposed such that at least portions of the welding trajectory are covered in the first direction.

Advantageously, a length of the clamping bar (along the longitudinal direction thereof) is substantially larger than a width or a thickness of the clamping bar. The elongated bar-shape of the clamping bar may preferably be continuous and closed, i.e. of a circular or rectangular ring shape.

The width of the clamping tool is defined as the extension thereof perpendicular to the first direction and perpendicular to its longitudinal direction. The thickness of the clamping tool is defined as parallel to the first definition.

Further advantageously, the welding trajectory can comprise any shape. For example, the welding trajectory, as seen from a plan view onto a surface of the components to be welded, can be circular, square-shaped, or can be meander-shaped. In the foregoing and in the following, the "longitudinal direction" of the welding trajectory is defined as the extension direction of the welding trajectory, i.e. a direction "infinitesimally" following along the path of the welding trajectory. Essentially, the longitudinal direction of the welding trajectory lies in a plane defined by the extension of the welding trajectory, especially a plane defined by a boundary between the components to be welded. In the preferably aforementioned case of a three-dimensional welding trajectory, the longitudinal direction of the welding trajectory is defined as a projection thereof to the surface of the top component. In other words, the longitudinal direction of the welding trajectory in this case is defined as seen in plan view onto outer surfaces of the components, i.e. a view seen from the laser device.

Advantageously, the longitudinal direction or extension of the clamping bar is parallel to the respective surface of the component in direct contact with the clamping bar.

Further advantageously, in the foregoing and in the following, the at least one clamping bar being disposed so as to be substantially parallel to the welding trajectory means that the (respective) clamping bar disposed (along a stacking direction of the components) above the welding trajectory is parallel to the portion of the welding trajectory that it covers. For example, if the welding trajectory is rectangular shaped, and four clamping bars are provided, each clamping bar is disposed such that its longitudinal direction is parallel to one side of the rectangular welding trajectory. In a further example, in the case that the welding trajectory is rectangular shaped, one continuous clamping bar with a rectangular shape is provided, wherein each side of the rectangular clamping bar is parallel to one side of the rectangular welding trajectory. In other words, advantageously, the clamping bar is disposed such that a plane defined by its extension directions is plane-parallel to the plane defined by the extension directions of the welding trajectories, especially the plane defined by the contact surfaces between the components to be welded.

The at least one clamping bar is further disposed such that it covers at least portions of the welding trajectory in the first direction perpendicular to the longitudinal direction of the welding trajectory. Advantageously, the first direction is the stacking direction in which the at least two components are stacked. In other words, the first direction is preferably a thickness direction of the stack. The welding trajectory being covered in the first direction essentially means that the clamping bar is disposed along a straight line extending perpendicularly from the longitudinal direction of the welding trajectory between the at least one laser device and the welding trajectory. In other words, the at least one clamping bar covers the welding trajectory as seen from a plan view onto the clamped outer surface of the stacked components (i.e. as seen from the laser device).

Advantageously, the clamping bar comprises a rectangular ring shape or a meander-shape, each especially with rounded corners, or a circular ring-shape along its longitudinal extension.

Further preferably, the shape of the clamping bar corresponds to the shape of the welding trajectory. In other words, for example, if the welding trajectory is a rectangular ring shape, the clamping bar is also preferably of a rectangular ring shape. On the other hand, in a preferable case that the welding trajectory is meander-shaped, the clamping bar is also preferably meander-shaped.

In a further advantageous embodiment, the clamping tool is block-shaped. Preferably, especially in contrast to the bar-shaped clamping bar, the block-shaped clamping tool (also referred to as "clamping block") is characterized in that its longitudinal extension (length) is not substantially larger than its width or thickness. The clamping block is especially used for spot welding of the components, its dimensions being respectively adapted thereto.

In an advantageous embodiment, the clamping tool comprises a tapered wedge-shaped cross-section. In other words, the clamping tool is preferably tapered along the first direction, especially towards the clamped components. Further preferably, the side of the clamping tool with a smaller width in cross section via the tapered shape is the end of the clamping tool which is brought into contact with the (top) component. Preferably, the clamping bar comprises the tapered wedge-shaped cross-section. Further preferably, the block-shaped clamping block comprises the tapered wedge-shaped cross-section.

Advantageously, the clamping tool is formed of a thermally well conducting material, especially of a metal. For example, the clamping tool is formed of copper or iron.

Further advantageously, the clamping tool is connected to a cooling device so as to be actively cooled. Therein, the clamping tool preferably comprises at least one coolant passage through which a coolant fluid flows. Preferably, the at least one coolant passage extends through the clamping bar along its longitudinal direction. The clamping tool preferably comprises two passages for circulation of the coolant fluid. Further preferably, one coolant passage is provided in the clamping tool with a turning point to allow for circulation of the coolant fluid. Further preferably, the at least one coolant passage has a meander-shape extending through the clamping tool, especially through the clamping bar.

Preferably, the cooling device is a coolant fluid pump.

In another advantageous embodiment, the clamping tool may be heated, especially for decreasing temperature gradients in the components between their top surface and the welding point or the welding trajectory.

In another advantageous embodiment, the laser device is configured to generate at least one high-aperture focused laser beam. In the present case, "high- aperture" means that an opening angle of the generated laser beam as seen in cross section of the radiated stack, is high. Further preferably, "high-aperture" means that the entire respective beam, especially its enveloping beam profile, impinges upon the welding trajectory or welding point at a high angle. In the case that the entire respective beam impinges upon the welding trajectory or welding point at a high angle, this angle corresponds to the aforementioned off-angle.

For example, the aforementioned beam or enveloping profile thereof impinges upon the respective contact surface between the components at an angle with respect to a thickness axis of the clamping tool along the first direction of for example 15° to 85°, preferably 20° to 80°, more preferably 25° to 75°, more preferably 30° to 70°, more preferably 35° to 65°, more preferably 45° to 60°, more preferably 50° to 55°, and/or at any one of the aforementioned values. The aforementioned angle values preferably correspond to the half-angle of the entire enveloping profile. For instance, if the aforementioned angle of the beam with respect to the thickness axis of the clamping tool is 35°, then the total opening angle of the enveloping profile is 70°. For preferable transparent-transparent welding, in which both components are transparent, the aforementioned angle is preferably 15° or preferably 30°, with a total opening angle of 30° or 60°, respectively. "Transparent" in the sense of transparent-transparent welding means substantially transparent for visible light. However, the respective components are not substantially transparent for a wavelength of the laser beam, which for instance has a wavelength of roughly 2 µm.

In the case of the enveloping profile of the beam impinging at these aforementioned angles, these angles do not necessarily correspond to the aforementioned off-angle (propagation-angle), as these angles pertain preferably only to the enveloping profile and its opening angle with respect to a beam center, and preferably not to the general propagation direction of the (entire) beam. As an illustrative example of this, the clamping tool clamps the surface at an off-angle of 5° to the surface normal of the component, the laser beam propagates at an off-angle of 10° in the same angle direction as the off-angle of the clamping tool, and the enveloping profile has an (opening) angle of 15°.

One preferable example of "high-aperture" is a numerical aperture of at least 0.3, preferably at least 0.4.

Preferably, the at least one laser beam comprises a ring-shaped cross-section in a direction perpendicular to the first direction. In other words, when viewed from a plan view onto the surface of the respective component, the laser beam preferably comprises a ring-shape. Further preferably, as seen in a cross section of the stack of components, the ring-shaped laser beam has intensity maxima near or at the sides of the clamping tool.

In the foregoing and in the following, "ring-shape" preferably means a circle-ring. On the other hand, "ring-shape" preferably means an elliptical ring. In the case of the elliptical ring, a long half-axis thereof is preferably parallel to the longitudinal extension of the welding trajectory and/or the clamping bar.

Further preferably, a diameter of the ring-shaped laser beam, when viewed from a plan view, at a height corresponding to the top of the clamping tool, opposite to the component in contact therewith, is larger than a width of the top of the clamping tool.

Preferably, the laser device comprises at least one axicon for generating the ring-beam. Further preferably, the laser device comprises two axicons for generating the ring-beam.

Further preferably, the laser device comprises a waveguide fiber which is configured to generate the ring-beam.

In one advantageous embodiment, the laser device is configured to generate a plurality of laser beams. Therein, at least one of the plurality of laser beams is preferably a singular laser beam focused on the welding trajectory. Preferably, the aforementioned single laser beam is a high-aperture focused laser beam. Thereby, an incident angle of the singular laser beam onto the respective component surface is high, as elucidated above.

The high-aperture focused laser beam is preferably a ring-shaped beam (in cross-section) and/or a Gaussian laser beam and/or a top-hat beam.

Advantageously, the laser device comprises at least one laser scanner configured to scan the at least one laser beam. Preferably, the laser scanner is configured to scan all laser beams of the plurality of laser beams generated by the at least one laser device.

Preferably, the laser scanner is configured to scan the at least one laser beam along the welding trajectory. In other words, the laser scanner is configured to scan the at least one laser beam so as to irradiate the entire welding trajectory.

Alternatively or in addition to the laser scanner scanning the laser beam along the welding trajectory, the laser device may comprise a fixed optic, wherein the components are moved so as to scan the laser along the welding trajectory.

Further preferably, at least one of the at least one laser scanner(s) is configured to scan the at least one laser beam such that the laser beam produces, when integrated over the irradiation direction of a point on the welding trajectory, a resultant beam with a ring-shaped cross-section. This resultant beam is preferably a circle-ring or an elliptical ring.

Preferably, the laser device generates a singular laser beam that is circularly scanned by the laser scanner so as to produce the resultant beam with a ring-shaped cross-section as seen in plan view onto the respective component.

The present invention also concerns a method for clamping and welding components. The method comprises the steps of providing a stack of at least two components that are to be welded along a welding trajectory or at a welding point, clamping the stack, generating at least one laser beam, and welding the components via the at least one laser beam along the welding trajectory or at the welding point. In the step of clamping the stack, the stack is clamped in a first direction with a clamping device comprising a clamping tool. Therein, the clamping tool is disposed along the first direction directly above the welding trajectory or directly above the welding point such that it passes a clamping force of the clamping device into the component in contact with the clamping tool at the welding trajectory or at the welding point. In the step of generating the at least one laser beam, the laser beam is generated so as to pass by the clamping bar along the first direction and so as to impinge on the welding trajectory.

Preferably, the method for clamping and welding of components is carried out using the laser welding device according to any one of the advantageous embodiments described in the foregoing.

Further preferably, the advantageous embodiments described in the foregoing with respect to the laser welding device correspondingly apply also the method for clamping and welding components. This especially pertains to those embodiments for example concerning the placement of the clamping tool (clamping bar and/or clamping block) and/or the propagation of the laser beam.

Preferably, in the clamping step, the clamping tool configured as a clamping bar is disposed along the first direction above the welding trajectory such that its longitudinal extension is substantially parallel to the welding trajectory and such that it covers at least portions of the welding trajectory.

Preferably, the clamping device further comprises a holding frame which at least partially surrounds the clamping tool, wherein the holding frame is connected to the clamping tool via at least one holding fillet. In the step of clamping the stack, a clamping force is exerted onto the holding frame along the first direction, is transferred via the at least one holding fillet to the clamping tool and is transferred, via the clamping tool, to the stack directly above the welding trajectory.

Preferably, the components that are to be welded comprise a plastic.

In the foregoing embodiments, the (along the first direction) top component preferably comprises a transparent material. The bottom component preferably comprises a transparent material. In other words, the components preferably comprise a material suitable for transparent laser welding.

In an alternative embodiment, the bottom component comprises a nontransparent and absorbing material, especially a nontransparent additive, which is configured to absorb light of the spectrum of the laser beam, thus increasing the amount of heat generated at the welding trajectory. In the case of both components being transparent, the laser device preferably generates a laser beam with a wavelength of roughly 2 µm. In the case of using one or more components comprising a nontransparent material, especially a nontransparent additive, the laser device preferably generates a laser beam with a wavelength of roughly 1 µm. Alternatively, a wavelength of between roughly 800 nm and 980 nm may be used. Further alternatively, a wavelength of roughly 1600 nm may be used.

The laser device is preferably a thulium laser, especially a thulium fiber laser, which generates a wavelength of roughly 2 µm.

Preferably, a thickness of the components, especially of the top component, is roughly between 0.5 mm and 2 mm. With the foregoing described embodiments, a width of the weld, in the direction perpendicular to the first direction and the longitudinal directions of the welding trajectory and/or of the clamping bar, can be 1 mm to 2 mm, preferably 0.05 mm to 0.6 mm. A height of the weld in the first direction is preferably 1 mm or less, more preferably 0.5 mm or less.

Further details, advantages, and features of the preferred embodiments of the present invention are described in detail with reference to the figures. Therein:
Fig. 1 shows a schematic cross-section of a laser welding device according to a first embodiment of the present invention;
Fig. 2 shows a schematic cross-section of a laser welding device according to a comparative example not falling under the scope of the present invention;
Fig. 3 shows a further schematic cross-section of a laser welding device according to the first embodiment of the present invention;
Fig. 4 shows a detailed sectional view of a laser welding device according to a second embodiment of the present invention;
Fig. 5 shows a schematic view of a laser device of the laser welding device according to the first or the second embodiment of the present invention;
Fig. 6 shows a schematic cross-sectional view of the intensity profile of the laser beam at line "A" of figure 5;
Fig. 7 shows a schematic cross-sectional view of the intensity profile of the laser beam at line "B" of figure 5;
Fig. 8 shows a schematic cross-sectional view of the intensity profile of the laser beam at line "C" of figure 5; and
Fig. 9 shows a schematic view of a laser welding device according to a third embodiment of the present invention; and
Fig. 10 shows a schematic block diagram of a method for clamping and welding components according to the present invention.

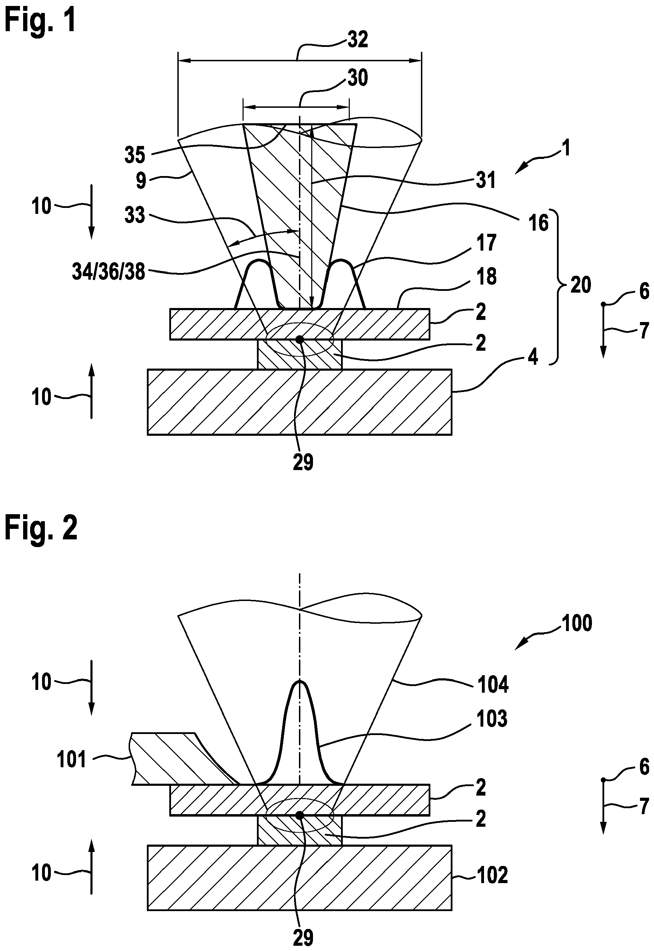

Figure 1 shows a cross section of a laser welding device 1 according to a first embodiment of the present invention.

Figure 2 shows a laser welding device 100 of a comparative example not falling under the scope of the present invention.

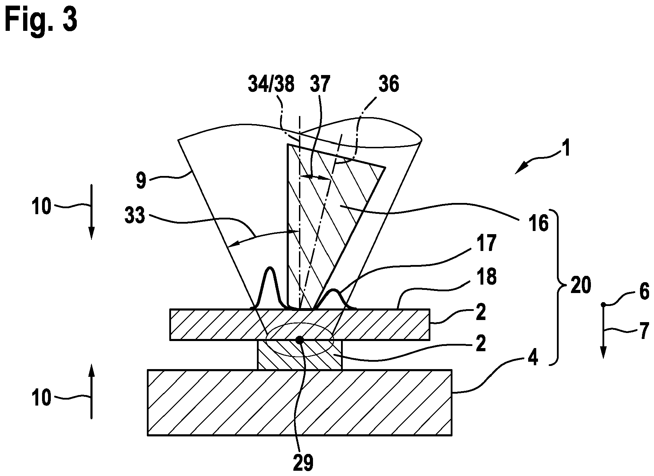

Figure 3 shows a further schematic cross-section of a laser welding device according to the first embodiment of the present invention.

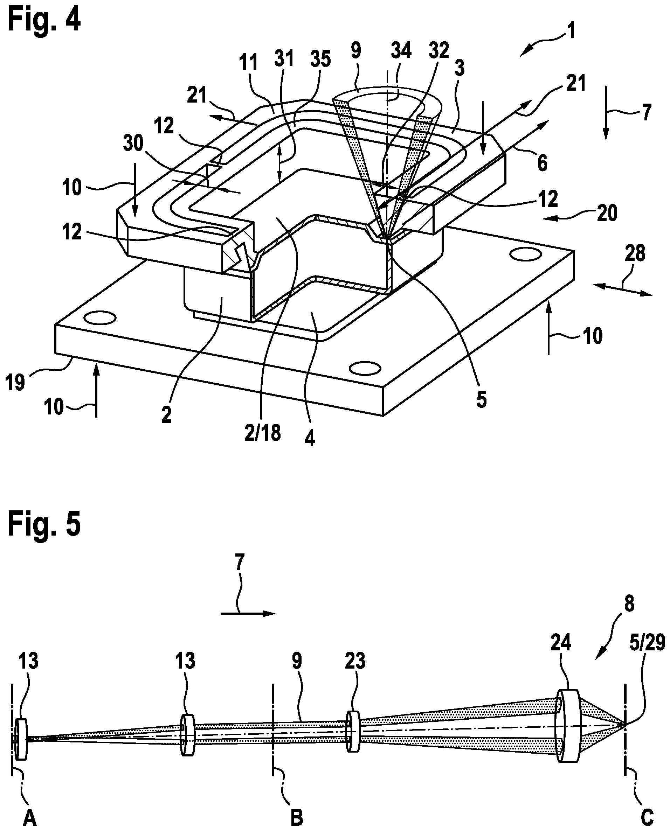

As can be taken from figure 1, the laser welding device 1 of the present embodiment comprises a clamping device 20. In this embodiment, the clamping device 20 comprises a clamping tool 3 and a clamping jaw 4. Further herein, the clamping tool 3 is substantially block-shaped and will be further referred to as "clamping block 3". "Block-shaped" refers to a shape of the clamping block 3 in which a longitudinal extension thereof is not substantially larger than its width 30 or its thickness 31, in contrast to a clamping bar 3 explained in further detail below with respect to figure 4. The clamping block 3 of the present embodiment is especially employed for spot welding the components 2 at a welding point 29, whereas the clamping bar 3 shown in figure 4 is especially employed for welding along a welding trajectory 5.

The clamping block 3 and the clamping jaw 4 exert a clamping force 10 onto components 2 that are to be laser welded. The components 2 are, for example, each semi-transparent and/or transparent plastic plates. In essence, the components 2 are formed of any material suitable for laser welding. On the other hand, the shown element with reference numeral 4 may also be a workpiece holder or jig, or any other (rigid) surface on which the components 2 are placed or mounted. In this case, the clamping device 20 does not necessarily comprise a clamping jaw 4, instead clamping the components 2 between the clamping tool 3 and the aforementioned surface or workpiece holder or jig.

In the present embodiment, the components 2 are to be welded together at a welding point 29. The two components 2 are stacked along a first direction 7. In the present embodiment, the two components 2 together form a so-called "T-joint". The welding point 29 is disposed, with respect to the first direction 7, at a contact surface of the two components 2.

As can be taken from figure 2, the laser welding device 100 of the comparative example also comprises a clamping device 101, 102 which clamps two components 2 using a clamping force 10 along the first direction 7. Herein, however, the clamping device 101, 102 comprises a first clamping jaw 101 and a second clamping jaw 102. The clamping jaw 101 clamps the top component 2 at a surface location thereof outside, in particular at the sides, of the welding point 29. In other words, when viewed in a plan view along the first direction 7, the first clamping jaw 101 of the comparative example does not cover the welding point 29, in contrast to the clamping block 16 of the laser welding device 1 shown in figure 1. Further, as shown in figure 2, a Gaussian laser beam 104 is generated by a laser device (not shown) and impinges on the welding point 29. An intensity profile 103 of the Gaussian laser beam 104 has its maximum intensity (focal point) at the welding point 29, so as to heat the components 2 at their contact surface and thereby weld them together. However, due to the clamping force 10 exerted by the clamping device 101, 102 being outside of the welding point 29, the comparative example fails to securely and reliably bring the two components 2 into close contact with one another at the welding point 29, especially in the case that the two components 2 comprising the T-joint are flexible.

In contrast, the laser welding device 1 of the present embodiment comprises the clamping block 16, which exerts the clamping force 10 onto a top surface 18 of the top component 2, i.e. the component 2 with which the clamping block 16 is brought into contact. The clamping block 16 is in contact with the top surface 18 of the top component 2 directly above the welding point 29. Thereby, the components 2 are brought into close and secure contact with one another at the welding point 29.

Further, as will be explained in greater detail below, the laser welding device 1 of the present embodiment comprises at least one laser device (see figures 5 to 9) which generates at least one high-aperture focused laser beam 9. In the present embodiment, as can be seen from an intensity profile 17 of the laser beam 9, an intensity distribution 17 is ring-shaped when viewed in plan view along the first direction 7. In other words, the laser beam 9 is configured so as to pass by the clamping block 16 along the first direction 7 and impinge upon the welding point 29.

To achieve this, a beam diameter 32 of an enveloping profile of the laser beam 9 is larger than the width 30 of the clamping block 16, especially at the height, along the first direction 7, of a top surface 35 of the clamping block 16. Further, the laser beam 9 comprises an opening angle 33 with respect to a beam center axis 34. As shown in figure 1, the opening angle 33 corresponds to the half-angle of the total opening of the enveloping profile of the laser beam 9. In other words, a total opening angle of the enveloping profile is two times the opening angle 33.

In the case shown in figure 1, the clamping block 16 is clamped onto the surface 18 parallel to a surface normal axis 38 such that a thickness axis 36 of the clamping block 16 is co-axial with or corresponds to the surface normal axis 38 of the surface 18. In other words, the clamping block 16 clamps the surface 18 perpendicularly.

Further herein, the laser beam 9 is generated so as to propagate along the surface normal axis 38 of the surface 18. Therefore, the laser beam center axis 34 is co-axial with or corresponds to the surface normal axis 38 of the surface 18. Thus, the laser beam center axis 34 shown herein is co-axial with or corresponds to the thickness axis 36 of the clamping block 16.

As a comparison with figure 3 shows, the clamping block 16 can also clamp the surface 18 at an off-angle 37. The off-angle 37 is defined as an angle 37 between the surface normal axis 38 and the thickness axis 36 of the clamping block 16. Further herein, the laser beam 9 propagates along or parallel to the surface normal axis 38. On the other hand, the laser beam 9 can also propagate with an off-angle (not shown) to the surface normal axis 38 (propagation-angle). In such a case, the off-angle of the laser beam 9 preferably corresponds to the off-angle 37 of the clamping block 16.

As shown in figure 3, due to the off-angle 37 of the clamping block 16, the ring-shaped intensity profile 17 of the laser beam 9 has, on one side (right side of figure 3) of the clamping block 16, a lower intensity maximum due to the clamping block 16 slightly hindering the propagation of the laser beam 9. On the other hand, the laser beam 9 may propagate with a propagation-angle (off-angle) with respect to the surface normal axis 38 to alleviate this. Further, a beam width 32 of the laser beam 9 or the aperture of the laser beam 9 may be adjusted so as to achieve a symmetrical intensity profile 17 or a power of the laser beam 9 may be adjusted.

The clamping block 16 shown in figures 1 and 3 comprises a tapered cross-section.

In other words, the clamping block 16 is disposed in a clamped state of the components 2 such that the welding point 29 is covered in the first direction 7 by the clamping block 16. By generating the high-aperture focus laser 9 as shown in figures 1 and 3, the laser beam 9 passes by the non-transparent clamping block 16 and can thus impinge upon the welding point 29 in an essentially unhindered or unobstructed manner.

Figure 4 shows a detailed sectional view of a laser welding device 1 according to a second embodiment of the present invention.

As can be taken from figure 4, the laser welding device 1 of the second embodiment comprises the clamping tool 3, 16 and the workpiece holder 4, between which two components 2 which are to be welded are clamped using a clamping force 10 exerted by the clamping device 20. In the present embodiment, the clamping tool 3, 16 is bar-shaped and will be further referred to as "clamping bar 3".

Further, as explained above, the laser welding device 1 of the present embodiment is employed for welding the components 2 along a welding trajectory 5, which is defined as a predetermined trajectory along which the two components 2 are to be welded. The cross-sectional view of figure 1 essentially also corresponds to a cross-sectional view of the laser welding device 1 of the second embodiment shown in figure 4, due to the longitudinal extension of the clamping bar 3 and of the welding trajectory 5 not being visible therein. Taking this into consideration, the welding trajectory 5 extends along its longitudinal direction 6 in the depth direction of figure 1.

In the present embodiment, as shown in figure 4, in addition to the clamping bar 3 and the workpiece holder 4, the clamping device 20 further comprises a holding frame 11 which surrounds the clamping bar 3. In addition, the clamping device 20 comprises holding fillets 12 which connect the holding frame 11 to the clamping bar 3. The clamping device 20 shown in embodiment one of figures 1 and 3 may also comprise such a holding frame 11 and at least one holding fillet 12 connecting the holding frame 11 to the clamping block 16.

The clamping device 20 is mounted on a further work piece holder 19, which may also function as a jig.

As can be taken from figure 4, the clamping bar 3 of the present embodiment comprises a rectangular ring-shape in plan view along the first direction 7. Further, the welding trajectory 5 corresponds to the plan view shape of the clamping bar 3. In other words, in the present embodiment, the welding trajectory 5 is also rectangular ring-shaped along its longitudinal extension 6, i.e. following along its entire longitudinal extension 6.

The longitudinal direction 6 or the longitudinal extension 6 of the welding trajectory 5 is defined as a direction in which the welding trajectory 5 extends perpendicular to the first direction 7. In the present case, due to the rectangular shape of the welding trajectory 5, the welding trajectory 5 essentially comprises four longitudinal extension directions 6, one for each side of the welding trajectory 5. The welding trajectory 5 of the present embodiment lies within a plane, i.e. is a two-dimensional ring. On the other hand, the welding trajectory 5 can also have portions extending along the first direction 7, i.e. be three-dimensional. In both cases, the clamping bar 3 is preferably flat on the top surface 18 of the top component 2, as shown in figure 4.

As can be seen in figure 4, the clamping bar 3 is disposed in the clamped state such that its longitudinal direction 21, defined by an extension direction of the clamping bar 3, is parallel to the welding trajectory 5, i.e. parallel to the longitudinal direction 6 of the welding trajectory 5, and perpendicular to the first direction 7 of the clamping force 10. In other words, the clamping bar 3 is disposed in a plane which is plane-parallel to a plane defined by the extension directions 6 of the welding trajectory 5, or in the case of the three-dimensional welding trajectory plane-parallel to a projection of the welding trajectory 5 on the top surface 18 of the top component 2.

Further, in plan view along the first direction 7, the clamping bar 3 covers the welding trajectory 5, especially the entire welding trajectory 5. In the present embodiment, a rectangular weld is formed corresponding to the rectangular shape of the clamping bar 3. In other words, the shape of the clamping bar 3 defines the (projection) shape of the welding trajectory 5, as the components 2 are laser welded along the longitudinal direction 21 of the clamping bar 3.

Further, the clamping bar 3 comprises a tapered wedge-shaped cross section. Therein, the clamping bar 3 is tapered towards the component 2 in contact with the clamping bar 3.

Although figure 4 shows one continuous clamping bar 3 as a rectangular ring shape, the clamping bar 3 may also comprise a different shape. Essentially, the clamping bar 3 may comprise any shape which corresponds to the pre-defined welding trajectory 5 along which the components 2 are to be welded, especially corresponding to a projection shape of the welding trajectory 5 onto the top surface 18 of the top component 2. For instance, the clamping bar 3 may be, in plan view along the first direction 7, a circular ring, a single or a plurality of bars or stripes, or meander-shaped. Due to the clamping bar 3 being connected to the holding frame 11 via the plurality of holding fillets 12, the clamping bar 3 may comprise any shape corresponding to the shape of the pre-defined welding trajectory 5.

Further, the clamping device 20 may comprise a plurality of clamping bars 3. For instance, the rounded corners of the clamping bar 3 shown in figure 4 may be left out, so as to define four individual clamping bars 3, which are each connected to one side of the holding frame 11 via one or more holding fillets 12.

Herein, the clamping force 10 along the first direction 7 is applied to the holding frame 11, for instance via a press (not shown). This clamping force 10 is then transferred via the holding fillets 12 to the clamping bar 3 and thus onto the top component 2. With this, it is possible to employ a plurality of clamping bar 3 shapes, and thus a plurality of welding trajectory 5 shapes, without the need to change a configuration of the press which exerts the clamping force 10 onto the holding frame 11.

As also shown in figure 4, an envelope of the laser beam 9 passes by the clamping bar 3 in the first direction 7 and impinges upon the welding trajectory 5. In the following, with reference to figures 5 to 9, the generation of such a high-aperture focused laser beam 9 for the first or the second embodiment of the present invention will be described.

As can be taken from figure 5, the laser device 8 of the present invention generates the ring-shaped laser beam 9 using two axicons 13 disposed, along the beam direction or the first direction 7, in series.

Instead of the axicons 13 as refractive lenses shown in figure 5, the axicons 13 may be diffractive optical elements or reflective optical elements.

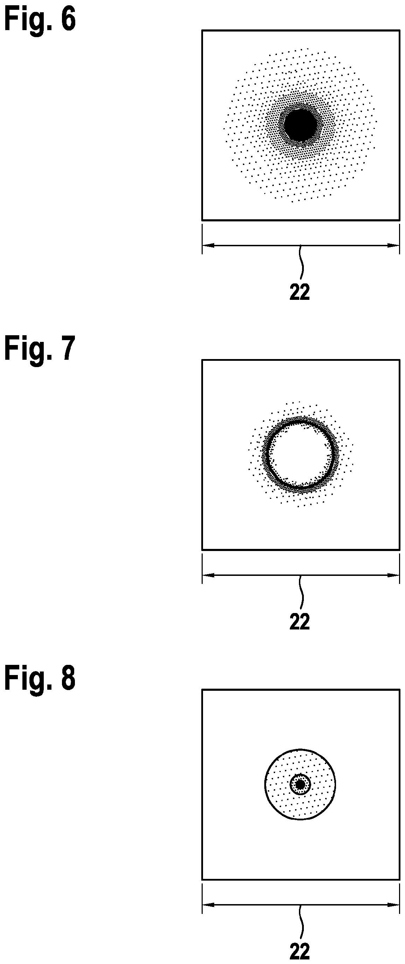

As shown in figure 6, which shows a beam cross-section at line "A" in figure 5, the laser device 8 first generates a collimated input beam with a Gaussian profile. An intensity profile diagram width 22 of figure 6 is, for reference, roughly 15 mm.

As shown in figure 7 which shows a beam cross-section at line "B" of figure 5, the intensity profile of the beam 9 is ring-shaped after passing through the two axicons 13. The intensity profile diagram width 22 of figure 7 is, for reference, roughly 15 mm.

The laser device 8 further comprises a diverging lens 23 and a converging lens 24 in order to widen the beam profile of the laser beam 9. The converging lens 24 has its focal point at the welding trajectory 5, which is also shown in figure 8 corresponding to a beam cross-section at line "C" of figure 5. The intensity profile diagram width of figure 7 is, for reference, roughly 0.4 mm.

As a comparison of figure 5 with figure 1 or 4 shows, the portion of the laser beam 9 between the converging lens 24 and the welding trajectory 5 corresponds to the section of the laser beam 9 shown in figures 1 or 4. In other words, the clamping tool 3, 16 is disposed, along the first direction 7 or the beam direction shown in figure 5, between the converging lens 24 and the welding trajectory 5 (i.e. between the converging lens 24 and the component 2).

With the configuration shown in figures 5 to 8, the laser device 8 of the present embodiment generates a ring-shaped laser beam which passes by the clamping tool 3, 16 along the first direction 7 and is focused on and impinges upon the welding trajectory 5 or upon the welding point 29.

As can be taken from figure 4, the laser beam does not entirely pass by the clamping bar 3. Instead, due to the ring shape of the laser beam 9, the laser beam 9 passes by the clamping bar 3 only on inner and outer sides of the clamping bar 3 in a radial direction 28. The radial direction 28 is perpendicular to the longitudinal extension 6, 21 of the welding trajectory 5 and of the clamping bar 3.

Although not shown in figure 5, the laser device 8 of embodiments one and two further comprises a laser scanner for scanning the laser beam 9 along the welding trajectory 5 or between different welding points 29. On the other hand, instead of such a laser scanner, the components 2 may be moved, for example via the workpiece holders 4, 19 or the jig 4, 19, while the laser beam 9 is fixed in space. In both cases, the laser device 8 is preferably configured to adaptively adjust the focus of the laser beam 9, especially for three-dimensional welding trajectories 5 or for welding points 29 at different heights along the first direction 7.

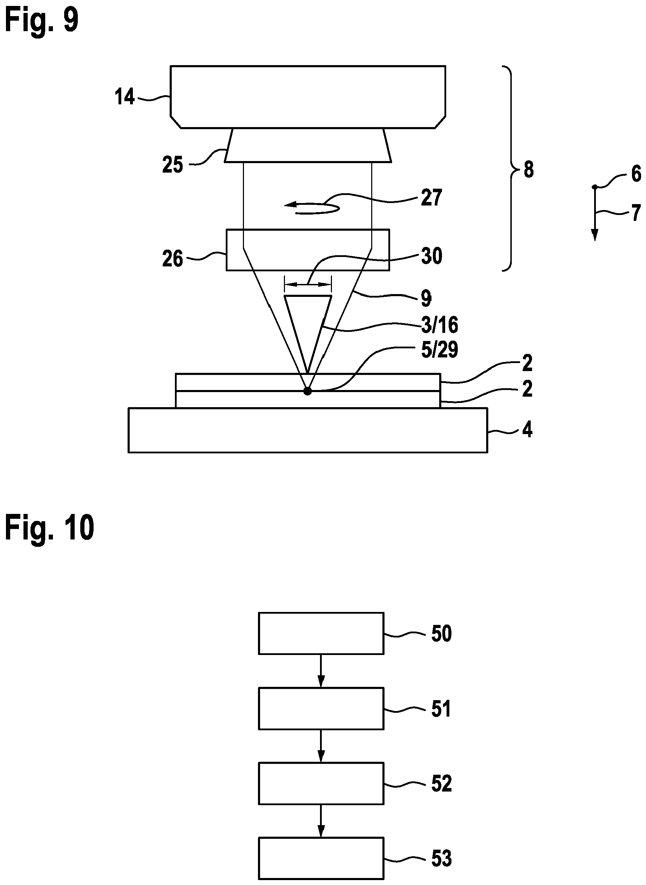

Figure 9 shows a cross section of a laser welding device 1 according to a third embodiment of the present invention.

In the present embodiment, the laser device 8 comprises a (further) laser scanner 14. The laser scanner 14 scans the generated laser beam 9, which is in this case a Gaussian laser beam, along a circular scan direction 27. The scan direction 27 is perpendicular to the first direction 7. The shown laser scanner 14 may also be used for the aforementioned scanning of the laser beam 9 along the welding trajectory 5 or between different welding points 29.

Further, the laser device 8 of the present embodiment comprises telecentric optics 25 and/or F-theta-optics (not shown) and a ring mirror 26. The ring mirror 26 reflects the scanned laser beam 9 so as to impinge upon the welding trajectory 5 or upon the welding point 29. In other words, the ring mirror 26 is configured so as to focus the laser beam 9 onto the welding trajectory 5. Thereby, a laser beam 9 is generated which passes by the clamping tool 3, 16 along the first direction 7.

By scanning the laser beam 9 along the scan direction 27, when integrating over a duration of irradiation of a single point on the welding trajectory 5 or over a duration of irradiation of the welding point 29, a ring-shaped laser beam 9 is generated, i.e. a resultant beam with a ring-shaped cross-section is generated. In this case, the ring mirror 26 has a high aperture, thereby producing a high-aperture laser beam 9.

Alternatively or in addition to the foregoing described embodiments of generating a high-aperture laser beam 9, the laser device 8, or multiple laser devices 8, may be configured to generate a plurality of laser beams 9, especially a plurality of the foregoing described laser beams 9. For instance, the laser device 8 may generate a plurality of laser beams 9 each focused onto the welding trajectory 5 or onto the welding point 29 so as to overlap, especially with constructive interference, on the welding trajectory 5 or on the welding point 29. Therein, each such laser beam 9 is configured to pass by the clamping tool 3, 16 along the first direction 7. Such multiple laser beams 9 therefore do not necessarily need to be of a high-aperture. Such an embodiment has the further advantage that the laser beams 9 may be configured such that none thereof, even in part, impinge upon the clamping tool 3, 16.

As one exemplary use-case, in the foregoing embodiments, the (along the first direction 7) top component 2 preferably comprises a material significantly transparent for visible light. The bottom component 2 preferably comprises a material significantly transparent for visible light (so-called "transparent-transparent welding"). On the other hand, the components 2 may comprise opaque, for instance PA6, plastics, especially without additional absorbing materials (so-called "absorber-free laser transmission welding"). In an alternative embodiment, the bottom component 2 comprises a nontransparent and absorbing material, especially a nontransparent additive, which is configured to significantly absorb light of the spectrum of the laser beam 9, thus increasing the amount of heat generated at the welding trajectory 5 or at the welding point 29. In this case, the laser beam 9 has a wavelength of typically between 800 nm and 980 nm. In the case of one or both components 2 being transparent, the laser device 8 preferably generates a laser beam 9 with a wavelength of roughly 2 µm, which is absorbed by the components 2. In the case of using one or more components 2 comprising a nontransparent material, especially a nontransparent additive, the laser device 8 alternatively generates a laser beam 9 with a wavelength of roughly 1 µm, which is absorbed by the components 2.

The laser device 8 is preferably a thulium laser, especially a thulium fiber laser, which preferably generates a wavelength of roughly 2 µm.

Preferably, a thickness of the components 2, especially of the top component 2, is typically between roughly 0.5 mm and 2 mm. With the foregoing described embodiments, a width of the weld, in the direction perpendicular to the first direction 7 and perpendicular to the longitudinal directions 6, 21, i.e. along the radial direction 28, can be 1 mm to 2 mm, preferably 0.05 mm to 0.6 mm. A height of the weld in the first direction 7 is preferably 1 mm or less, more preferably 0.5 mm or less.

Preferably, a numerical aperture of the laser device 8, especially of the converging lens 24 and/or the ring mirror 26 is larger than roughly 0.3, especially larger than roughly 0.4. Such values (NA > 0.3) are defined as "high-aperture".

Figure 10 shows a schematic block diagram of a method for clamping and welding components 2 according to the present invention.

The method for clamping and welding components 2 of the present embodiment comprises the following steps. In the following, the method will be described in detail with reference to the second embodiment of the laser welding device 1, i.e. when welding along a welding trajectory 5 using a clamping bar 3.

In a first step 50, a stack of two or more components 2 which are to be welded along the welding trajectory 5 is provided.

Then, in a second step 51, the stack is clamped in the first direction 7. As elucidated above, the first direction 7 is perpendicular to a surface (top and/or bottom surface) 18 of the stack between the clamping bar 3 and the clamping jaw 4 or the workpiece holder/jig 4. In this clamping step 51, the clamping bar 3 is disposed, along the first direction 7, above the welding trajectory 5 such that its longitudinal extension 21 is parallel to the welding trajectory 5. In other words, the clamping bar 3 is disposed such that its longitudinal extension 21 is parallel to the longitudinal extension 6 of the welding trajectory 5. In particular, the clamping bar 3 is disposed, in the first direction 7, directly above the welding trajectory 5 such that it covers the welding trajectory 5 when seen in plan view along the first direction 7.

Further, in a third step 52, at least one laser beam 9 is generated so as to pass by the clamping bar 3 along the first direction 7 and impinge upon the welding trajectory 5. A focal point of the laser beam 9, especially of each laser beam 9, is, along the first direction 7, behind or after the clamping bar 3 and on the welding trajectory 5. Thereby, at the height in the first direction 7 of the clamping bar 3, the laser beam 9 has a width perpendicular to the first direction 7 and perpendicular to the longitudinal direction 6 of the welding trajectory 5 which is greater than a width of the clamping bar 3 (see also figure 3). In other words, the width or radius in cross-section of the laser beam 9 along the aforementioned radial direction 28 is greater than that of the clamping bar 3.

Then, in a fourth step 53, the components 2 are welded along the welding trajectory 5 via the at least one laser beam 9. In particular, the at least one laser beam 9 is scanned, for instance via the use of the laser scanner 14, along the longitudinal extension 6 of the welding trajectory 5. Thereby, a contact surface between the components 2 is heated and melted, thus welding the components 2 together. To achieve this, the laser scanner 14 comprises one or more mirrors (not shown), in particular one for each scan-direction.

The steps 50 - 53 described in the foregoing may especially be carried out using the laser welding device 1 according to any one of the foregoing embodiments. In particular, the method steps 50 - 53 are carried out using the laser welding device 1 according to embodiment one (figures 1 and 3). Therein, in the clamping step 51, the clamping block 16 is disposed, along the first direction 7, directly above the welding trajectory 5 or the directly above the welding point 29 such that it passes the clamping force 10 into the component 2 in contact with the clamping block 16 at the welding trajectory 5 or at the welding point 29.

Of course, the laser welding device 1 according to embodiment one can also be used for welding the components 2 along the welding trajectory 5 or at multiple, different welding points 29. In particular, such a method further comprises a step of lifting the clamping block 16 from the components 2 and disposing it on a further portion or point on the welding trajectory 5 or at a different welding point 29 and repeating the generating step 52 and the welding step 53.

Alternatively, the laser welding device 1 according to embodiment two can also be used for welding the components 2 at one or more welding points 29. In this case, the clamping bar 3 preferably does not need to be lifted and further disposed on the components 2, in case multiple welding points 29 are to be welded along the longitudinal extension 6 of the clamping bar 3.

The foregoing described laser welding device 1 and method for clamping and welding components 2 are preferably used to manufacture lab-on-a-chip devices. For example, if a clamping bar 3 with a meander-shape is used, fluid channels having a corresponding meander-shape may be manufactured in the components 2 via the laser welding described above.

In addition to the foregoing written explanation of the invention, it is explicitly referred to figures 1 to 10, which in detail show features of the invention.

### Reference list

- 1: Laser welding device
- 2: Welding components
- 3: Clamping bar (clamping tool)
- 4: Clamping jaw/workpiece holder
- 5: Welding trajectory
- 6: Longitudinal direction
- 7: First direction
- 8: Laser device
- 9: Laser beam
- 10: Clamping force
- 11: Holding frame
- 12: Holding fillet
- 13: Axicon
- 14: Laser scanner
- 16: clamping block (clamping tool)
- 17: Intensity profile of laser beam
- 18: Top surface of component
- 19: Workpiece holder/jig
- 20: Clamping device
- 21: Longitudinal direction of clamping bar
- 22: Intensity profile diagram width
- 23: Diverging lens
- 24: Converging lens
- 25: Telecentric optics
- 26: Ring mirror
- 27: Scan direction
- 28: Radial direction
- 29: Welding point
- 30: Width of clamping tool
- 31: Thickness of clamping tool
- 32: Diameter of laser beam
- 33: Opening angle of laser beam
- 34: Beam center axis
- 35: Top surface of clamping tool
- 36: Thickness axis of clamping tool
- 37: Off-angle of clamping tool
- 38: Surface normal axis
- 50: First step
- 51: Second step
- 52: Third step
- 53: Fourth step
- 100: Laser welding device (comparative example)
- 101: First clamping jaw
- 102: Second clamping jaw
- 103: Intensity profile of laser beam
- 104: Laser beam (envelope)

## Claims

1. Laser welding device (1) for clamping and welding components (2), comprising:
• a clamping device (20), which comprises at least one clamping tool (3, 16), and is configured to clamp, in a first direction (7), at least two components (2) that are to be welded along a welding trajectory (5) or at a welding point (29);
• wherein the at least one clamping tool (3, 16) is configured to, in a clamped state, pass a clamping force (10) of the clamping device (20) along the first direction (7) into the component (2) in contact with the clamping tool (3, 16) directly above the welding trajectory (5) or directly above the welding point (29); and
• at least one laser device (8) configured to generate at least one laser beam (9) which passes by the at least one clamping tool (3, 16) along the first direction (7) and impinges on the welding trajectory (5) or on the welding point (29).

2. Laser welding device (1) according to claim 1, wherein the at least one clamping tool (3, 16) is substantially nontransparent, especially substantially nontransparent to the spectrum of the laser beam (9).

3. Laser welding device (1) according to any one of the foregoing claims, wherein the clamping device (20) comprises a holding frame (11) which at least partially surrounds the clamping tool (3, 16), wherein the holding frame (11) is connected to the clamping tool (3, 16) via at least one holding fillet (12).

4. Laser welding device (1) according to claim 3, wherein the holding frame (11), the at least one holding fillet (12) and the at least one clamping tool (3, 16) are formed integrally with one another.

5. Laser welding device (1) according to any one of the foregoing claims, wherein the clamping tool (3, 16) is a clamping bar (3) and is especially disposed, in the clamped state, such that its longitudinal direction (21) is substantially parallel to the welding trajectory (5) and especially such that at least portions of the welding trajectory (5) are covered in the first direction (7).

6. Laser welding device (1) according to any claim 5, wherein the clamping bar (3) comprises a rectangular ring shape or a meander-shape, each especially with rounded corners, or a circular ring-shape along its longitudinal extension (6).

7. Laser welding device (1) according to any one of the foregoing claims, wherein the clamping tool (3, 16) comprises a tapered wedge-shaped cross-section.

8. Laser welding device (1) according to any one of the foregoing claims, wherein the clamping tool (3, 16) is formed of a thermally well conducting material, especially of a metal, and/or is connected to a cooling device so as to be actively cooled.

9. Laser welding device (1) according to any one of the foregoing claims, wherein the laser device (8) is configured to generate at least one high-aperture focused laser beam (9).

10. Laser welding device (1) according to claim 9, wherein the at least one laser beam (9) comprises a ring shaped cross-section in a direction (6) perpendicular to the first direction (7).

11. Laser welding device (1) according to claim 10, wherein the laser device (8) comprises at least one axicon (13) for generating the ring-beam (9).

12. Laser welding device (1) according to any one of claims 9 to 11, wherein the laser device (8) is configured to generate a plurality of laser beams (9) and wherein at least one of the plurality of laser beams (9) is a singular laser beam (9) focused on the welding trajectory (5).

13. Laser welding device (1) according to any one of the foregoing claims, wherein the laser device (8) comprises at least one laser scanner (14) configured to scan the at least one laser beam (9).

14. Laser welding device (1) according to claim 13, wherein at least one of the at least one laser scanner(s) (14) is configured to scan the at least one laser beam (9) such that the laser beam (9) produces, when integrated over the irradiation duration of a point on the welding trajectory (5) or on the welding point (29), a resultant beam with a ring-shaped cross-section.

15. Method for clamping and welding components (2), comprising the steps of:
• providing (50) a stack of at least two components that are to be welded along a welding trajectory (5) or at a welding point (29);
• clamping (51) the stack in a first direction (7) with a clamping device (20) comprising a clamping tool (3, 16), wherein the clamping tool (3, 16) is disposed along the first direction (7) directly above the welding trajectory (5) or directly above the welding point (29) such that it passes a clamping force (10) of the clamping device (20) into the component (2) in contact with the clamping tool (3, 16) at the welding trajectory (5) or at the welding point (29);
• generating (52) at least one laser beam (9) which passes by the clamping tool (3, 16) along the first direction (7) and impinges on the welding trajectory (5) or the welding point (29); and
• welding (53) the components (2) along the welding trajectory (5) or at the welding point (29) via the at least one laser beam (9).
